# EUROPEAN PATENT SPECIFICATION

(11) **EP 2 529 988 B1**
(45) Date of publication and mention of the grant of the patent: **15.03.2017**
(21) Application number: 11736761.5
(22) Date of filing: 21.01.2011
(51) Int. Cl.: B60T 11/26, B60T 17/22, H01H 36/02, B60T 11/22

(54) **RESERVOIR TANK AND BRAKE DEVICE EMPLOYING SAME**
RESERVOIRTANK UND BREMSVORRICHTUNG DAMIT
RÉCIPIENT DE RÉSERVOIR ET DISPOSITIF DE FREIN UTILISANT CELUI-CI

(30) Priority: 26.01.2010 JP 2010014178
(43) Date of publication of application: 05.12.2012
(73) Proprietor: Bosch Corporation, Tokyo 150-8360 (JP)
(72) Inventor: TAKAHASHI, Toshiyuki, Hiki-gun Saitama 355-0813 (JP)
(74) Representative: DREISS Patentanwälte PartG mbB
(86) International application number: PCT/JP2011/000319
(87) International publication number: WO 2011/093044

(56) References cited:
- DE-A1- 10 310 170
- GB-A- 2 164 107
- JP-A- 61 146 662
- JP-A- 63 115 016
- JP-U- 50 110 664
- JP-U- 61 030 573
- JP-U- 62 193 526

## Description

### Technical Field

The present invention relates, in general, to the technical field of a reservoir tank that is used in hydraulic brake systems and hydraulic clutch systems utilizing hydraulic pressure such as oil pressure and stores hydraulic fluid and to the technical field of a brake system using the reservoir tank. In particular, the present invention relates to a reservoir tank according to the preamble of claims 1 and 4. Such a reservoir tank is disclosed by the document JP-A-2006-519728, for which DE 103 10 170 Al is its German family document.

Conventionally, among vehicles such as automobiles, there are vehicles that employ hydraulic brake systems and hydraulic clutch systems utilizing hydraulic pressure. In the hydraulic brake systems and hydraulic clutch systems, a master cylinder that generates hydraulic pressure and a reservoir tank that stores hydraulic fluid supplied to the master cylinder are used.

In order for the master cylinder to generate hydraulic pressure at times when hydraulic pressure is needed, it is necessary for a predetermined fluid volume of the hydraulic fluid to be stored inside the reservoir tank. For this reason, usually a fluid volume detection sensor is disposed in the reservoir tank, and when the fluid volume inside the reservoir tank falls below the predetermined fluid volume, the fluid volume detection sensor detects this and displays it on a fluid volume indicator. Because of the display of the fluid volume indicator, the reservoir tank is replenished with hydraulic fluid so that it is ensured that the fluid volume inside the reservoir tank is equal to or greater than the predetermined fluid volume.

As a conventional reservoir tank fluid volume detection sensor, there is known a fluid volume detection sensor where a normally closed lead switch is disposed on an upper surface of the reservoir tank and where a magnet is disposed on a float that moves up and down in accordance with the height of the fluid level of the hydraulic fluid inside the reservoir tank (e.g., see JP-A-2006-519728).

In the fluid volume detection sensor of JP-A-2006-519728 , the float moves up and down while being guided by a guide that hangs down from the inner surface of the upper end of the reservoir tank. Additionally, when the fluid level of the hydraulic fluid inside the reservoir tank is high, the float moves up and the magnet moves closer to the lead switch and switches off (opens) the lead switch with its magnetic force.

Because of this, a warning light goes out. Further, when the fluid level of the hydraulic fluid inside the reservoir tank is lower than the light-out fluid level, the float moves down, the magnet moves away from the lead switch, the magnetic force of the magnet no longer has an effect on the lead switch, and the lead switch switches on (closes) on its own. Because of this, the warning light comes on.

### SUMMARY OF INVENTION

### Technical Problem

Incidentally, in the reservoir tank fluid volume detection sensor disclosed in JP-A-2006-519728 the magnet is disposed in a position substantially in the center of the float in its up-and-down direction, so the dimension of the float in its up-and-down direction is set relatively small. However, if the dimension of the float in its up-and-down direction is small, the frictional resistance between the float and the guide becomes greater and it becomes easier for the float to catch on the guide when the float inclines due to a fluctuation in the fluid level when the vehicle tilts or the like. For this reason 1 the concern that it becomes difficult for the float to move up and down smoothly and reliably in association with changes in the fluid level is conceivable.

Therefore 1 it is conceivable to make the dimension of the float in its up-and-down direction larger but if the dimension of the float in its up-and-down direction is simply made larger 1 the magnet ends up becoming farther away from the lead switch. For this reason it is necessary to move the light-out fluid level closer to the lead switch in order for the lead switch to be switched on and off by the magnet a t the light-out fluid level-that is in order to raise the reliability of the operation of the lead switch. However 1 there is the problem that 1 if the light-out fluid level is moved closer to the lead switch1 it is difficult to set the hydraulic fluid storage capacity of the reservoir tank large. If the light-out fluid level is moved away from the lead switch in order to set the hydraulic fluid storage capacity of the reservoir tank large I the magnet also ends up becoming greatly away from the lead switch at the times when the lead switch switches on and off. For this reason 1 the magnetic force of the magnet must be increased in order to reliably switch the lead switch on and off 1 and costs become higher.

The present invention has been made in light of these circumstances, and it is an object thereof to provide an in expensive reservoir tank, and a brake system using the reservoir tank, in which the light-out fluid level can be moved even farther away from the lead switch while reliably moving the float up and down and stabilizing the operation of the lead switch.

### Solution to Problem

The above problem is solved by the reservoir tank of claim 1.

Further, in the reservoir tank of the present invention, the float is integrally molded and formed by resin, and the brace reinforcement members have draft for removing a mold at the time of mold release.

Moreover, in the reservoir tank of the present invention, the draft is formed in a direction that does not hinder the flow of the resin at the time of resin filling.

Alternatively, the above problem is solved by the reservoir tank of claim 4.

Moreover, a brake system of the present invention includes at least a reservoir tank that stores hydraulic fluid, a master cylinder to which the hydraulic fluid inside the reservoir tank is supplied and which generates braking pressure at the time of operation, and brake cylinders that operate on hydraulic pressure from the master cylinder, wherein the reservoir tank is any one of the above reservoir tanks of the present invention.

### Advantageous Effects of Invention

According to the reservoir tank of the present invention configured in this way, the lead switch is disposed above the magnet, the magnet is supported on the upper end of the float by the magnet braces, and the float is moved up and down while being guided by a first guide and a second guide. In this way, because the magnet is supported on the upper end of the float by the magnet braces, the dimension of the float in its up-and-down direction can be made larger. Consequently, the float can be moved up and down smoothly and reliably in accordance with the fluid level of the hydraulic fluid.

In particular, reinforcement ribs are disposed on the magnet braces. The magnet braces are reinforced by the reinforcement ribs, whereby the strength of the magnet braces becomes greater. Consequently, it becomes possible to suppress bending of the magnet braces even if the magnet braces are subjected to an external force. Consequently, the operability of the float can be improved more effectively. Because of this, the magnet can be moved up and down in a stable posture, and it becomes possible to stably operate the lead switch.

Further, the reinforcement ribs have draft such that their thickness becomes smaller toward their distal ends. Because of this, it becomes possible to suppress deformational bending of the magnet braces when the mold slides at the time of mold release, and it becomes possible to suppress mold shrinkage of the float even when the reinforcement ribs are disposed. Consequently, deformation of the float is suppressed, so the operability of the float can be improved even more effectively. Moreover, because the reinforcement ribs have the draft described above, the resistance of the reinforcement ribs can be made smaller with respect to the movement of the hydraulic fluid inside the reservoir tank in the vehicle front-and-rear direction. Because of this, the posture of the float body can be stabilized even when the hydraulic fluid moves in the vehicle front-and-rear direction, and false operation of the lead switch at times when the fluid level drops (times when the hydraulic fluid decreases in quantity) can be suppressed. Moreover, because the draft of the reinforcement ribs is formed in a direction that does not hinder the flow of the resin at the time of resin filling, the fillability of the resin can be improved, and it becomes possible to lower resin filling insufficiencies or resin filling defects.

Moreover, because the magnet is disposed on the upper end of the float, the magnet can be moved closer to the lead switch. Because of this, the light-out fluid level can be moved away from the lead switch. Consequently, it becomes possible to set the hydraulic fluid storage capacity of the reservoir tank even larger. Moreover, even if the light-out fluid level is moved away from the lead switch, the position of the magnet at the light-out fluid level of the float can be moved closer to the lead switch. Because of this, the reliability of the operation of the lead switch can be raised. As a result, the magnetic force of the magnet can be made smaller and costs can be reduced.

Moreover, because the upper portion of the float is configured by the magnet braces, the area of the magnet braces subjected to the pressure of the hydraulic fluid can be made smaller. Because of this, even when the hydraulic fluid inside the reservoir tank moves abruptly due to sudden braking or sudden turning of the vehicle, for example, the force applied to the magnet braces by the moving hydraulic fluid can be suppressed. Consequently, the effects of the abrupt movement of the hydraulic fluid on the float can be reduced, false operation of the lead switch can be prevented even more effectively, and false lighting of the warning light can be prevented more reliably.

Moreover, by changing the length and the diameter of the magnet braces in various ways, it becomes possible to change the volume inside the float chamber in various ways. Consequently, reservoir tanks that differ in various ways depending on the types of vehicles in which the reservoir tank is installed can be accommodated more flexibly and more reliably.

As described above, according to the reservoir tank of the present invention, the float and the magnet of the reservoir tank can move up and down more reliably, so false lighting of the warning light caused by false operation of the fluid volume detection unit can be prevented more effectively.

According to the brake system using the reservoir tank of the present invention, the fluid level of the hydraulic fluid inside the reservoir tank can be detected more reliably by the fluid volume detection unit, so the braking operation can be performed more reliably.

### BRIEF DESCRIPTION OF DRAWINGS

FIG. 1 is a diagram schematically showing a brake system equipped with a first example of a mode for carrying out a reservoir tank pertaining to the present invention;
FIG. 2 (a) is a partial cutaway view showing the reservoir tank of the first example, and FIG. 2 (b) is a longitudinal sectional view in the lengthwise direction of the reservoir tank of the first example;
FIG. 3 (a) is a sectional view along line IIIA-IIIA in FIG. 2 (a), FIG. 3 (b) is a view showing guides as seen from below, FIG. 3 (c) is a sectional view along line IIIC-IIIC in FIG. 3 (a), and FIG. 3 (d) is a sectional view along line IIID-IIID in FIG. 3 (a);
FIG. 4 (a) to FIG. 4 (e) show a float and a magnet of the first example, with FIG. 4 (a) being a front view, FIG. 4 (b) being a bottom view, FIG. 4 (c) being a top view, FIG. 4 (d) being a sectional view along line IVD-IVD in FIG. 4 (a), and FIG. 4 (e) being a sectional view along line IVE-IVE in FIG. 4 (d);
FIG. 5 (a) is a partial view showing magnet braces of the first example, FIG. 5 (b) is a top view, FIG. 5 (c) is a sectional view along line VC-VC in FIG. 5 (a), and FIG. 5 (d) is a sectional view along line VD-VD in FIG. 5 (c);
FIG. 6 (a) and FIG. 6 (b) show a second example of a mode for carrying out the reservoir tank of the present invention, with FIG. 6 (a) being the same sectional view as FIG. 3 (a) and
FIG. 6 (b) being a sectional view along line VIB-VIB in FIG. 6 (a) ; and
FIG. 7 (a) and FIG. 7 (b) show a third example of a mode for carrying out a reservoir tank which does not correspond to the present invention,
with FIG. 7 (a) being the same sectional view as FIG. 3 (a) and
FIG. 7 (b) being a sectional view along line VIIB-VIIB in FIG. 7(a).

### MODES FOR CARRYING OUT THE INVENTION

Modes for carrying out the present invention will be described below using the drawings.

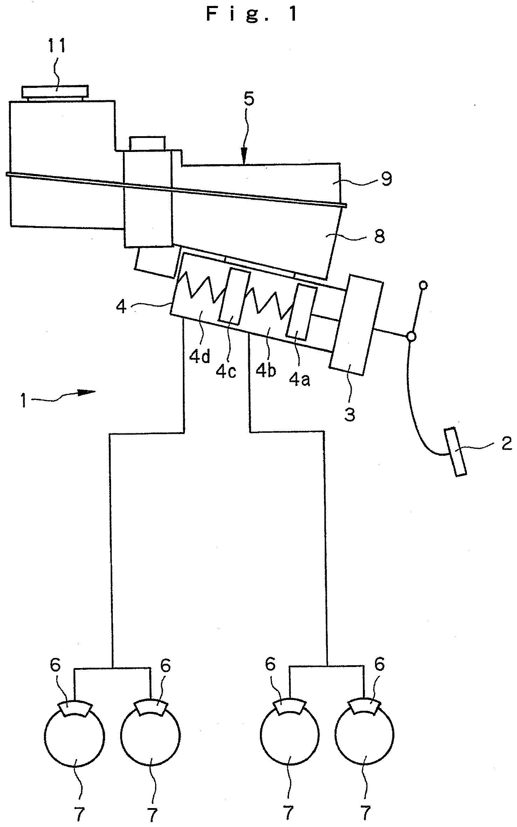

FIG. 1 is a diagram schematically showing a brake system equipped with a first example of a mode for carrying out a reservoir tank pertaining to the present invention.

As shown in FIG. 1, a hydraulic brake system 1 of the first example is basically the same as a conventionally publicly-known common dual hydraulic brake system. That is, the hydraulic brake system 1 is equipped with a brake pedal 2, a booster 3, a tandem master cylinder 4, a reservoir tank 5, and brake cylinders 6.

Additionally, when a driver steps on the brake pedal 2, the booster 3 operates, boosts the pedal force by a predetermined servo ratio, and outputs the boosted pedal force. Because of the output of the brake booster 3, a primary piston 4a of the tandem master cylinder 4 operates to supply hydraulic fluid in a primary hydraulic fluid chamber 4b to the brake cylinders 6 of one line and a secondary piston 4c operates to supply hydraulic fluid in a secondary hydraulic fluid chamber 4d to the brake cylinders 6 of the other line. When the loss stroke of each brake line ceases, the tandem master cylinder 4 generates hydraulic pressure. The hydraulic pressure of the tandem master cylinder 4 is transmitted to each of the brake cylinders 6, each of the brake cylinders 6 generates a braking force, and brakes are applied to each wheel 7.

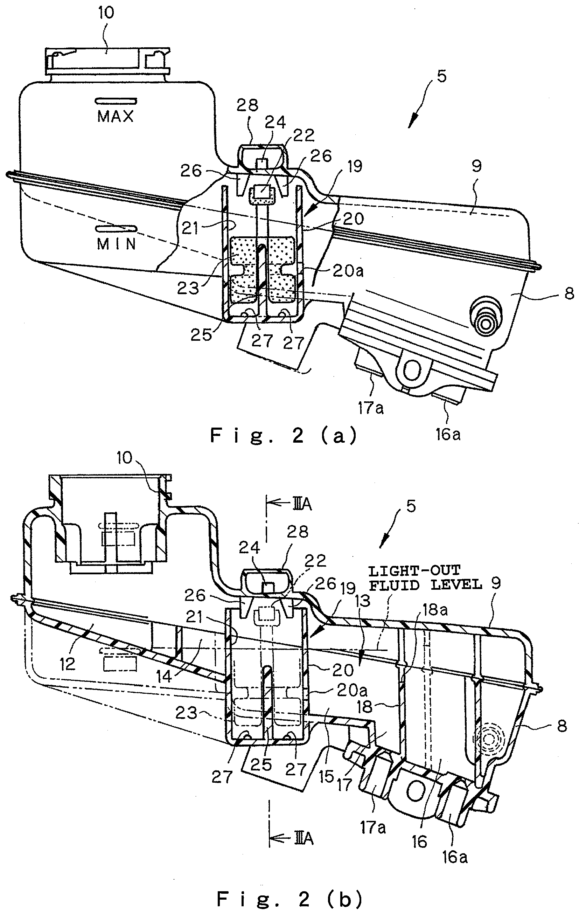

FIG. 2 (a) is a partial cutaway view showing the reservoir tank of the first example, and FIG. 2 (b) is a longitudinal sectional view in the lengthwise direction of the reservoir tank of the first example. In the description below, high and low of heights of bottoms of sites mean high and low in a state in which the reservoir tank is attached to a vehicle body and the vehicle is in a horizontal state.

As shown in FIG. 2 (a) and FIG. 2 (b) the reservoir tank 5 used in the brake system 1 of the first example has a container-like lower half body 8 that stores hydraulic fluid supplied to the tandem master cylinder 4 and opens upward and an upper half body 9 that closes off the open portion in the upper end of the lower half body 8. A hydraulic fluid inlet 10 is disposed in the upper half body 9, and the hydraulic fluid inlet 10 is opened and closed by a cap 11 (shown in FIG. 1).

The lower half body 8 of the first example has a hydraulic fluid supply portion 12, a hydraulic fluid storage chamber 13, and a hydraulic fluid passageway 14 that is disposed between the hydraulic fluid supply portion 12 and the hydraulic fluid storage chamber 13. The upper surface of the lower half body 8 and the lower surface of the upper half body 9 are heat-welded together such that the open portion in the upper end of the lower half body 8 is closed off. Consequently, the hydraulic fluid is supplied through the hydraulic fluid inlet 10 in the upper half body 9 to the hydraulic fluid supply portion 12.

The hydraulic fluid storage chamber 13 has a fluid volume detection chamber 15 , a primary hydraulic fluid storage chamber 16, and a secondary hydraulic fluid storage chamber 17. Additionally, in a state in which the reservoir tank 5 is attached to the vehicle body via the tandem master cylinder 4, the hydraulic fluid inlet 10, the hydraulic fluid supply portion 12, the fluid volume detection chamber 15, the secondary hydraulic fluid storage chamber 17, and the primary hydraulic fluid storage chamber 16 are disposed in this order from the vehicle front (the left side in FIG. 2 (b)) to the vehicle rear (the right side in FIG. 2 (b)).

The hydraulic fluid supply portion 12 is always communicated with the fluid volume detection chamber 15 via the hydraulic fluid passageway 14. Further, the fluid volume detection chamber 15 is always communicated with the secondary hydraulic fluid storage chamber 17. Moreover, the hydraulic fluid supply portion 12 is always communicated with the primary hydraulic fluid storage chamber 16 via another path of the hydraulic fluid passageway 14. The primary hydraulic fluid storage chamber 16 and the secondary hydraulic fluid storage chamber 17 are partitioned by a partition wall 18 but are always communicated with each other above an upper end 18a of the partition wall 18. The hydraulic fluid inside the primary hydraulic fluid storage chamber 16 is supplied to the primary hydraulic fluid chamber 4b of the master cylinder 4 through a primary hydraulic fluid supply opening 16a, and the hydraulic fluid inside the secondary hydraulic fluid storage chamber 17 is supplied to the secondary hydraulic fluid chamber 4d of the master cylinder 4 through a secondary hydraulic fluid supply opening 17a.

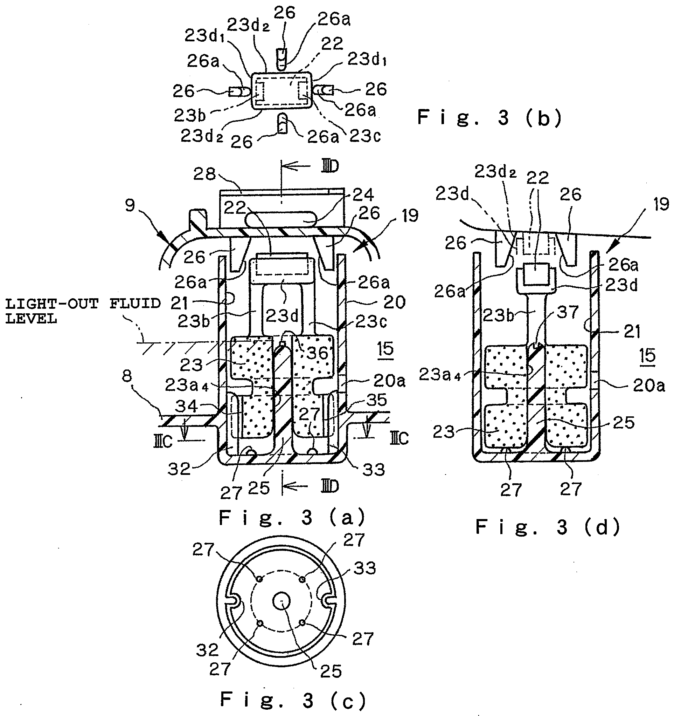

A fluid volume detection unit 19 is disposed in a position corresponding to the fluid volume detection chamber 15. The fluid volume detection unit 19 is disposed substantially in the center of the lower half body 8 in its front-and-rear direction (vehicle front-and-rear direction) and detects the fluid volume of the hydraulic fluid stored inside the reservoir tank 5. As shown enlarged in FIG. 3 (a), the fluid volume detection unit 19 is equipped with a float 23 that is disposed inside a float chamber 21 surrounded by a hollow cylinder-like partition wall 20 and has a magnet 22 on its upper end portion, a lead switch 24 that is disposed on the outer side of the upper half body 9 above the fluid volume detection unit 19 and is operated by the magnet 22, a solid cylinder-like (round rod-like) guide 25, trapezoidal guides 26, and bottom surface-side suction prevention projections 27.

The float chamber 21 is always communicated with the fluid volume detection chamber 15 on the outer peripheral side of the hollow cylinder-like partition wall 20 by a relatively small-diameter communication hole 20a formed in the hollow cylinder-like partition wall 20. Consequently, when the hydraulic fluid is stored inside the reservoir tank 5 until the fluid level becomes positioned higher than the communication hole 20a, the hydraulic fluid enters the float chamber 21 through the communication hole 20a. In that case, the height of the fluid level of the hydraulic fluid inside the float chamber 21 and the height of the fluid level of the hydraulic fluid inside the fluid volume detection chamber 15 always become the same. Further, even when the hydraulic fluid inside the reservoir tank 5 outside the hollow cylinder-like partition wall 20 abruptly moves due to sudden braking or sudden turning of the vehicle, for example, fluctuations in the fluid level of the hydraulic fluid inside the float chamber 21 are suppressed by the limiting action of the communication hole 20a. Because of this, false operation of the lead switch 24 is prevented.

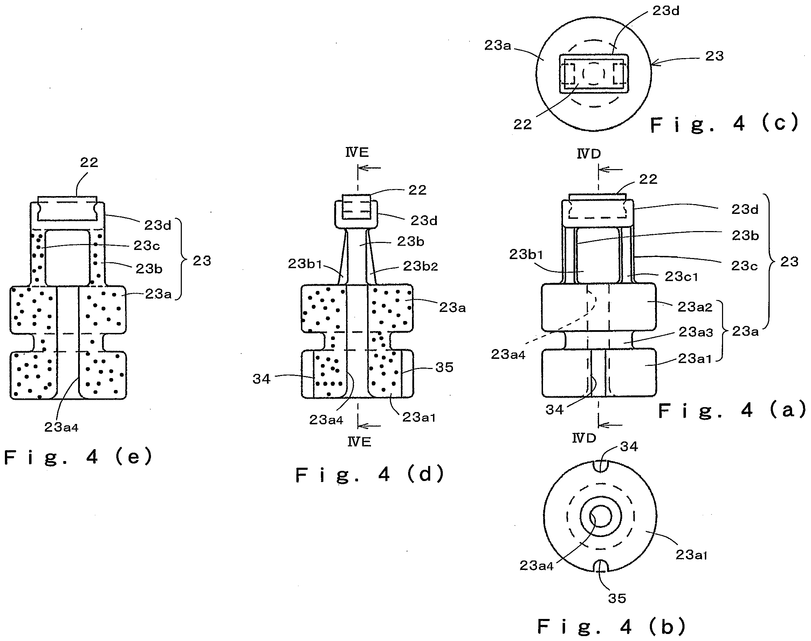

FIG. 4 (a) to FIG. 4 (e) show the float and the magnet of the first example, with FIG. 4 (a) being a front view, FIG. 4 (b) being a bottom view, FIG. 4 (c) being a top view, FIG. 4 (d) being a sectional view along line IVD-IVD in FIG. 4 (a), and FIG. 4 (e) being a sectional view along line IVE-IVE in FIG. 4 (d).

As shown in FIG. 4 (a) to FIG. 4 (e), the float 23 has a float body 23a, a pair of magnet braces 23b and 23c that are rectangular as seen from the side and cross-sectionally rectangular or cross-sectionally circular and are disposed projecting upward on the upper end of the float body 23a, and a rectangular container-like magnet support portion 23d that is disposed on the upper ends of the magnet braces 23b and 23c.

The float body 23a has an upper and lower pair of large-diameter circular outer peripheral portions 23a₁ and 23a₂ and a small-diameter circular outer peripheral portion 23a₃ that is disposed between and coaxially with the large-diameter circular outer peripheral portions 23a₁ and 23a₂. A cross-sectionally circular guide hole 23a₄ that penetrates the large-diameter circular outer peripheral portions 23a₁ and 23a₂ and the small-diameter circular outer peripheral portion 23a₃ in the up-and-down direction is bored in the centers of the large-diameter circular outer peripheral portions 23a₁ and 23a₂ and the small-diameter circular outer peripheral portion 23a₃.

As shown in FIG. 3 (a) and FIG. 3 (c), a pair of positioning ribs 32 and 33 are disposed on the inner peripheral surface of the hollow cylinder-like partition wall 20 so as to extend a predetermined length upward from the bottom surface of the float chamber 21 and relatively facing the diameter direction of the float chamber 21. As shown in FIG. 3 (a), FIG. 4 (a), FIG. 4 (b), and FIG. 4 (d), positioning long grooves 34 and 35 capable of fitting together with the positioning ribs 32 and 33 are disposed in the outer peripheral edge portion of the large-diameter circular outer peripheral portion 23a₁ of the float 23. Consequently, when the float 23 is accommodated inside the float chamber 21, the positioning grooves 34 and 35 become fitted together with the positioning ribs 32 and 33, whereby the float 23 is positioned in the circumferential direction. Because of this, the magnet 22 is positioned in the circumferential direction with respect to the lead switch 24. Particularly when using an anisotropic magnet having directionality for the magnet, the on and off operation of the lead switch 24 by the magnet can be performed more reliably because the magnet can be positioned in the circumferential direction with respect to the lead switch 24. The predetermined length of the positioning ribs 32 and 33 is set to a length with which the large-diameter circular outer peripheral portion 23a₂ on the upper side does not interfere when the float 23 has come to the lowermost end position.

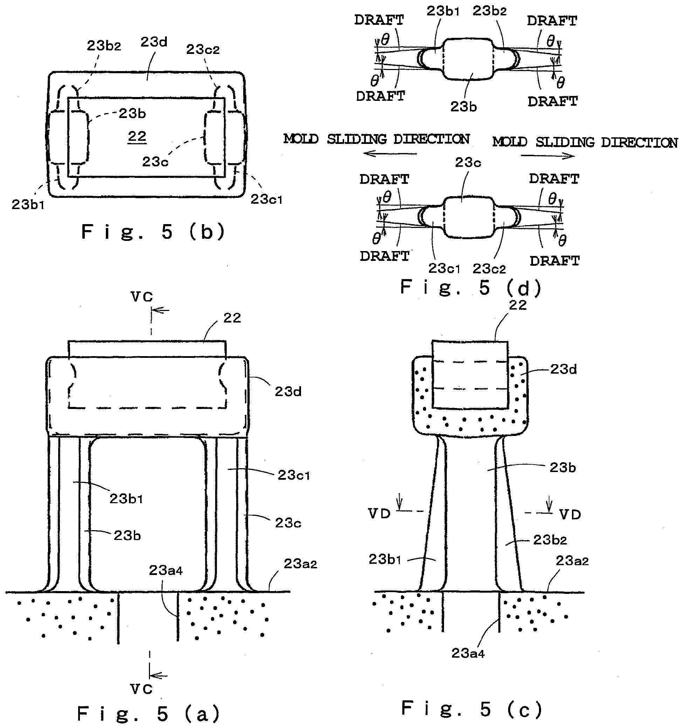

As shown in FIG. 5 (a), FIG. 5 (b), and FIG. 5 (c), the magnet braces 23b and 23c are placed a predetermined interval apart from each other. Because of this, the area of the magnet braces 23b and 23c subjected to the pressure of the hydraulic fluid becomes smaller, and even when the hydraulic fluid inside the reservoir tank 5 moves abruptly as described above, the force applied to the magnet braces 23b and 23c by the moving hydraulic fluid is suppressed. Consequently, the effects of the abrupt movement of the hydraulic fluid on the float 23 are reduced, and false operation of the lead switch 24 is prevented.

Further, as shown in FIG. 5 (a) to FIG. 5 (d), substantially right triangle plate-like reinforcement ribs 23b₁ and 23b₂ and 23c₁ and 23c₂ (which correspond to brace reinforcement members of the present invention) whose width at their upper portions is small and whose width at their lower portions is large are disposed on both sides of the magnet braces 23b and 23c, respectively. In that case, the reinforcement ribs 23b₁ and 23b₂ and 23c₁ and 23c₂ are disposed extending in a sliding direction and a vertical direction of a mold. The reinforcement ribs 23b₁ and 23b₂ and 23c₁ and 23c₂ reinforce the magnet braces 23b and 23c, respectively. Because of this, bending of the magnet braces 23b and 23c is suppressed. The float body 23a, the magnet braces 23b and 23c, the reinforcement ribs 23b₁ and 23b₂ and 23c₁ and 23c₂, and the magnet support portion 23d are integrally molded by foam resin. In that case, as shown in FIG. 5 (d), the reinforcement ribs 23b₁ and 23b₂ and 23c₁ and 23c₂ each have draft with an angle θ such that their thicknesses become smaller toward their distal ends. The draft is set to an incline in which the float 23 does not undergo mold shrinkage when the mold slides at the time of mold release. Consequently, mold shrinkage of the float 23 is suppressed even when the reinforcement ribs 23b₁ and 23b₂ and 23c₁ and 23c₂ are disposed. Moreover, the draft of the reinforcement ribs 23b₁ and 23b₂ and 23c₁ and 23c₂ is formed in a direction that does not hinder the flow of the resin at the time of resin filling. Because of this, the fillability of the resin that is a material improves at the time of molding of the float 23.

The magnet 22 is fixed to and supported on the magnet support portion 23d by integral molding with the float 23.

As shown in FIG. 2 (a), FIG. 2 (b), and FIG. 3 (a), a square cylinder-like lead switch attachment portion 28 is disposed on the outer surface of the upper half body 9 integrally with the upper half body 9. The lead switch 24 is inserted into the lead switch attachment portion 28 from the near side of the drawing of FIG. 2 (a) in a direction (vehicle left-and-right direction) orthogonal to this drawing (in a direction from the right side in FIG. 3 (a)) and is attached to the lead switch attachment portion 28. The lead switch 24 is configured as a normally closed switch that closes on its own. The float 23 moves up and down inside the float chamber 21 as indicated by the solid lines and the double-dotted lines in FIG. 3 (d) in accordance with the height of the fluid level of the hydraulic fluid inside the float chamber 21, whereby the magnet 22 also moves up and down.

In a case where the height of the fluid level of the hydraulic fluid is in a position a little higher than a prescribed minimum MIN position, the fluid level of the hydraulic fluid inside the float chamber 21 is also in the same height position as the height position of the fluid level inside the reservoir tank 5. For this reason, the float 23 is also in a height position corresponding to the height of this fluid level. The fluid level inside the float chamber 21 at this time becomes a fluid level at which the lead switch 24 switches on and off (that is, a light-out fluid level of the warning light), and the warning light does not come on.

Further, when the amount of brake fluid consumed inside the brake cylinders 6 increases, the amount of hydraulic fluid inside the reservoir tank 5 decreases, and the fluid level of the hydraulic fluid inside the float chamber 21 becomes lower, the float 23 moves down in correspondence to this together with the magnet 22, and the magnet 22 moves away from the lead switch 24. Until the height of the fluid level of the hydraulic fluid inside the float chamber 21 reaches the light-out fluid level, the off state of the lead switch 24 is maintained by the magnetic force of the magnet 22 even if the magnet 22 moves down, and the warning light comes on.

The solid cylinder-like (round rod-like) guide 25 is positioned in the center of the hollow cylinder-like partition wall 20 inside the float chamber 21 on the lower half body 8 and is disposed integrally with the lower half body 8 and projecting upward from the bottom surface of the float chamber 21. The guide 25 penetrates the guide hole 23a₄ in the float 23. Consequently, the float 23 moves up and down while being guided by the guide 25 and the inner peripheral surface of the hollow cylinder-like partition wall 20. In that case, the position of the center of gravity of the float 23 on whose upper end portion the magnet 22 is disposed is positioned on the upper side, but even when the position of the center of gravity is positioned on the upper side in this way, the float 23 and the magnet 22 move up and down smoothly virtually without tilting under their own weight because of the guide 25 and the inner peripheral surface of the hollow cylinder-like partition wall 20 (particularly the guide 25).

Moreover, as shown in FIG. 3 (a), a convex portion 36 is formed on the upper end of the guide 25. The convex portion 36 is a convex portion for venting gas at the time of resin molding of the lower half body 8. The convex portion 36 effectively vents gas at the time of resin molding of the lower half body 8, whereby the movement of the resin around the guide 25 is made excellent and the outer peripheral surface of the guide 25 is finished into a smooth and clean surface. In that case, as shown in FIG. 3(d), a concave portion 37 having the same function as the convex portion 36 can also be disposed instead of the convex portion 36 in the upper end of the guide 25 (for convenience of description, the concave portion 37 is shown instead of the convex portion 36 in FIG. 3 (d)).

As shown in FIG. 3 (a), FIG. 3 (b), and FIG. 3 (d), four of the trapezoidal guides 26 are disposed in correspondence to the four sides of the rectangular magnet support portion 23d. The trapezoidal guides 26 are all formed in the same trapezoidal shape from thin plates. In that case, the lengths on the upper sides of the guides 26 are set so as to become longer than the lengths on the lower sides, and the top sides of the guides 26 are molded integrally with the upper half body 9. That is, the guides 26 hang down from the inner surface of the upper end (the inner surface of the ceiling) of the reservoir tank 5. Each of the guides 26 has an inclined guide surface 26a. The guide surfaces 26a of pairs of the guides 26 that oppose each other are placed so as to become closer to each other heading upward. Centers between the guide surfaces 26a of the pairs of the guides 26 that oppose each other are set so as to coincide with the central axis of the guide 25.

Additionally, as indicated by the double-dotted line in FIG. 3 (d), when the float 23 rises, upper end corner portions 23d₁ and 23d₂ of the magnet support portion 23d come into contact with the guide surfaces 26a and are guided by the guide surfaces 26a. In FIG. 3 (d), only the upper end corner portions 23d₂ on the long sides of the magnet support portion 23d are shown, but the same is true of the upper end corner portions 23d₁ on the short sides of the magnet support portion 23d. Because of this, the center of the magnet 22 is positionally regulated and centered with respect to the center of the lead switch 24. In that case, when the float 23 moves up, the amount of guidance of the float 23 by the guide 25 decreases and the float 23 tends to become unstable, but because the magnet support portion 23d is guided by the guides 26 in this way, the float 23 stably moves up.

As shown in FIG. 3 (a), FIG. 3 (c), and FIG. 3 (d), the bottom surface-side suction prevention projections 27 are formed in hemispherical shapes and are disposed in a predetermined number (four in the example shown in the drawings) on the bottom surface of the float chamber 21 of the lower half body 8 so as to oppose the undersurface of the float 23. In that case, the bottom surface-side suction prevention projections 27 are disposed projecting at equally spaced intervals in the circumferential direction along a concentric circle that is centered on the central axis of the guide 25. Additionally, the bottom surface-side suction prevention projections 27 form a predetermined interstice between the undersurface of the float body 23a and the bottom surface of the float chamber 21 as a result of the undersurface of the float body 23a coming into contact the bottom surface-side suction prevention projections 27. Because of this, the undersurface of the float body 23a is prevented from being tightly sucked onto the bottom surface of the float chamber 21 when the float 23 has moved down the most. Consequently, when the hydraulic fluid has been supplied to the inside of the reservoir tank 5, the float 23 easily moves up as the fluid level of the hydraulic fluid rises, and the reliability of the floating (reliability of the operation) of the float 23 is improved.

According to the reservoir tank 5 of the first example, the lead switch 24 that is a normally closed switch is disposed above the magnet 22, the magnet 22 is disposed on the upper end of the float 23 by the magnet braces 23b and 23c, and the float 23 is moved up and down while being guided by the solid cylinder-like (round rod-like) guide 25. In this way, because the magnet 22 is supported on the upper end of the float 23 by the magnet braces 23b and 23c, the dimension of the float 23 in its up-and-down direction can be made larger. Consequently, the float 23 can be moved up and down smoothly and reliably in accordance with the fluid level of the hydraulic fluid. At this time, the position of the center of gravity of the float 23 on whose upper end the magnet 22 is disposed is positioned on the upper side, but even when the position of the center of gravity is positioned on the upper side in this way, the float 23 and the magnet 22 can be moved up and down smoothly virtually without tilting under their own weight. Because of this, the operability of the float 23 improves.

In particular, the reinforcement ribs 23b₁ and 23b₂ and 23c₁ and 23c₂ are disposed on the magnet braces 23b and 23c, respectively. The magnet braces 23b and 23c are reinforced by the reinforcement ribs 23b₁ and 23b₂ and 23c₁ and 23c₂, respectively, whereby the strength of the magnet braces 23b and 23c becomes greater. Consequently, it becomes possible to suppress bending of the magnet braces 23b and 23c even if the floats 23 collide with each other during transport of the floats 23 including the magnets 22, for example, and the magnet braces 23b and 23c are subjected to an external force such as the force of attraction and the force of repulsion of the magnetic forces of adjacent magnets 22. Consequently, the operability of the float 23 can be improved more effectively. Because of this, the magnet can be moved up and down in a stable posture, and it becomes possible to stably operate the lead switch.

Further, the reinforcement ribs 23b₁ and 23b₂ and 23c₁ and 23c₂ have draft with the angle θ such that their thicknesses become smaller toward their distal ends. Because of this, it becomes possible to suppress deformational bending of the magnet braces 23b and 23c when the mold slides at the time of mold release, and it becomes possible to suppress mold shrinkage of the float 23 even when the reinforcement ribs 23b₁ and 23b₂ and 23c₁ and 23c₂ are disposed. Consequently, deformation of the float 23 is suppressed, so the operability of the float 23 can be improved even more effectively. Moreover, because the reinforcement ribs 23b₁ and 23b₂ and 23c₁ and 23c₂ have the draft described above, the resistance of the reinforcement ribs 23b₁ and 23b₂ and 23c₁ and 23c₂ can be made smaller with respect to the movement of the hydraulic fluid inside the reservoir tank 5 in the vehicle front-and-rear direction. Because of this, the posture of the float body 23a can be stabilized even when the hydraulic fluid moves in the vehicle front-and-rear direction, and false operation of the lead switch 24 at times when the fluid level drops (times when the hydraulic fluid decreases in quantity) can be suppressed. Moreover, because the draft of the reinforcement ribs 23b₁ and 23b₂ and 23c₁ and 23c₂ is formed in a direction that does not hinder the flow of the resin that is a material at the time of resin filling, the fillability of the resin can be improved, and it becomes possible to lower resin filling insufficiencies or resin filling defects.

Moreover, because the upper portion of the float 23 is configured by the magnet braces 23b and 23c, the area of the magnet braces 23b and 23c subjected to the pressure of the hydraulic fluid can be reduced. Because of this, even when the hydraulic fluid inside the reservoir tank 5 moves abruptly due to sudden braking or sudden turning of the vehicle, for example, the force applied to the magnet braces 23b and 23c by the moving hydraulic fluid can be suppressed. Consequently, the effects of the abrupt movement of the hydraulic fluid on the float 23 can be reduced, false operation of the lead switch 24 can be prevented even more effectively, and false lighting of the warning light can be prevented more reliably.

Moreover, by changing the length and the diameter of the magnet braces 23b and 23c in various ways, it becomes possible to change the volume inside the float chamber 21 in various ways. Consequently, reservoir tanks 5 that differ in various ways depending on the types of vehicles in which the reservoir tank 5 is installed can be accommodated more flexibly and more reliably.

Moreover, because the trapezoidal guides 26 are disposed integrally with the upper half body 9 in such a way that the distance between the guide surfaces 26a of the guides 26 that oppose each other becomes smaller heading upward, the magnet 22 can be moved up while the upper end corner portions 23d₁ and 23d₂ of the magnet support portion 23d are guided by the inclined guide surfaces 26a. In that case, the float 23 that has moved up a predetermined amount while being guided by the guide 25 is guided by the guides 26, so even when the amount of guidance of the float 23 by the guide 25 decreases, the float 23 can be guided reliably by the guides 26 so that the magnet 22 can be positionally regulated and centered with respect to the lead switch 24. Because of this, tilting of the float 23 and the magnet 22 can be suppressed more reliably even when the position of the center of gravity of the float 23 is positioned on the upper side. Consequently, the on and off operation of the lead switch 24 can be performed more reliably by the self-weight of the float 23 and the magnet 22.

Further, because the magnet 22 is disposed on the upper end of the float 23, the magnet 22 can be moved closer to the lead switch 24. Because of this, the light-out fluid level can be moved away from the lead switch 24. Consequently, it becomes possible to set the hydraulic fluid storage capacity of the reservoir tank 5 even larger. Moreover, even if the light-out fluid level is moved away from the lead switch 24, the position of the magnet 22 at the light-out fluid level of the float 23 can be moved closer to the lead switch 24. Because of this, the reliability of the operation of the lead switch 24 can be raised. As a result, the magnetic force of the magnet can be made small and costs can be reduced.

Moreover, because the guide 25 is disposed projecting upward from the bottom surface of the float chamber 21 and the guides 26 hanging down from the inner surface of the upper half body 9 are formed out of trapezoidal thin plates, air pockets can be suppressed from arising even when the guides 25 and 26 are disposed.

Moreover, because the float 23 is guided by the guide 25, sliding resistance can be allowed to act on the float 23 when the float 23 moves up and down. Because of this, hysteresis can be generated in the on and off operation of the lead switch 24. Consequently, false operation of the lead switch 24 can be prevented, and false lighting of the warning light can be prevented. The sliding resistance is set so as to become a magnitude that does not have an effect on the reliability of the up and down movement of the float 23.

Moreover, because the float chamber 21 inside the hollow cylinder-like partition wall 20 and the fluid volume detection chamber 15 outside the hollow cylinder-like partition wall 20 are always communicated with each other by the communication hole 20a, even if the hydraulic fluid inside the reservoir tank 5 outside the hollow cylinder-like partition wall 20 moves abruptly due to sudden braking or sudden turning of the vehicle, for example, fluctuations in the fluid level of the hydraulic fluid inside the float chamber 21 can be suppressed by the limiting action of the communication hole 20a. Because of this, false operation of the lead switch 24 can be prevented, and false lighting of the warning light can be prevented.

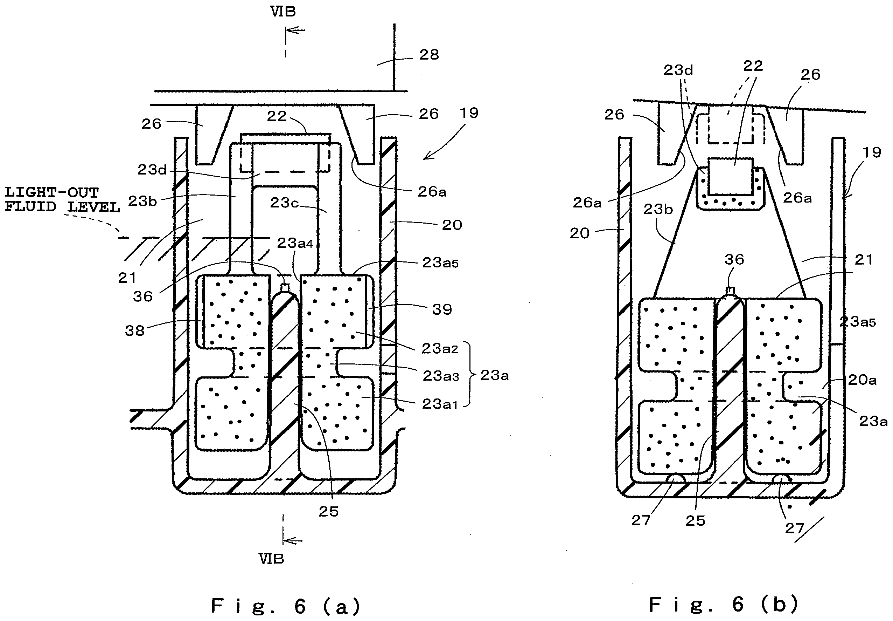

FIG. 6 (a) and FIG. 6 (b) show a second example of a mode for carrying out the reservoir tank of the present invention, with FIG. 6 (a) being the same sectional view as FIG. 3 (a) and FIG. 6 (b) being a sectional view along line VIB-VIB in FIG. 6 (a). In the description of examples hereinafter, the same reference numerals will be given to the same configural elements as in the example (s) preceding that example, whereby detailed description thereof will be omitted.

In the first example, the magnet braces 23b and 23c are formed in rectangular shapes as seen from the side and in cross-sectionally rectangular or cross-sectionally circular shapes, but as shown in FIG. 6 (a) and FIG. 6 (b), in the reservoir tank 5 of the second example, the magnet braces 23b and 23c are formed in trapezoidal shapes as seen from the side and in cross-sectionally rectangular shapes. In this way, because the magnet braces 23b and 23c are formed in trapezoidal shapes as seen from the side, the strength of the magnet braces 23b and 23c is made greater compared to the first example. That is, the magnet braces 23b and 23c of the second example are given a high-strength structure.

Further, the relative height position of the float body 23a with respect to the height position of the light-out fluid level differs from the relative height position of the float body 23a with respect to the height position of the light-out fluid level of the first example shown in FIG. 3 (a). That is, in the first example, the upper surface of the float body 23a is positioned a little higher than the height position of the light-out fluid level, but in the reservoir tank 5 of the second example, an upper surface 23a₅ of the float body 23a is positioned lower than the height position of the light-out fluid level. At this time, the relative height position of the light-out fluid level with respect to the height position of the magnet 22 of the first example and the relative height position of the light-out fluid level with respect to the height position of the magnet 22 of the second example are the same. Consequently, in the reservoir tank 5 of the second example, the height of the magnet braces 23b and 23c is made higher than the height of the magnet braces 23b and 23c of the first example.

In the reservoir tank 5 of the second example, a predetermined number (two in the example illustrated in the drawings) of slit-like hydraulic fluid passageways 38 and 39 are disposed extending in the up-and-down direction in the outer periphery of the upper large-diameter circular outer peripheral portion 23a₂. The hydraulic fluid passageways 38 and 39 are disposed at equally-spaced intervals apart from each other in the circumferential direction. Because of the hydraulic fluid passageways 38 and 39, the fluid motion of the hydraulic fluid from above the float 23 to below is made excellent, and the reliability of the floating of the float 23 is improved.

According to the reservoir tank 5 of the second example, the magnet braces 23b and 23c are given a high-strength structure, so it becomes possible to suppress bending deformation of the magnet braces 23b and 23c even without disposing the reinforcement ribs 23b₁ and 23b₂ and 23c₁ and 23c₂.

In the second example, the positioning ribs 32 and 33 and the positioning long grooves 34 and 35 of the first example are not disposed, but the positioning ribs 32 and 33 and the positioning long grooves 34 and 35 of the first example can also be disposed in the second example. Further, the hydraulic fluid passageways 38 and 39 can also be disposed likewise in the first example.

Other configurations and other action and effects of the reservoir tank 5 of the second example are the same as those in the first example.

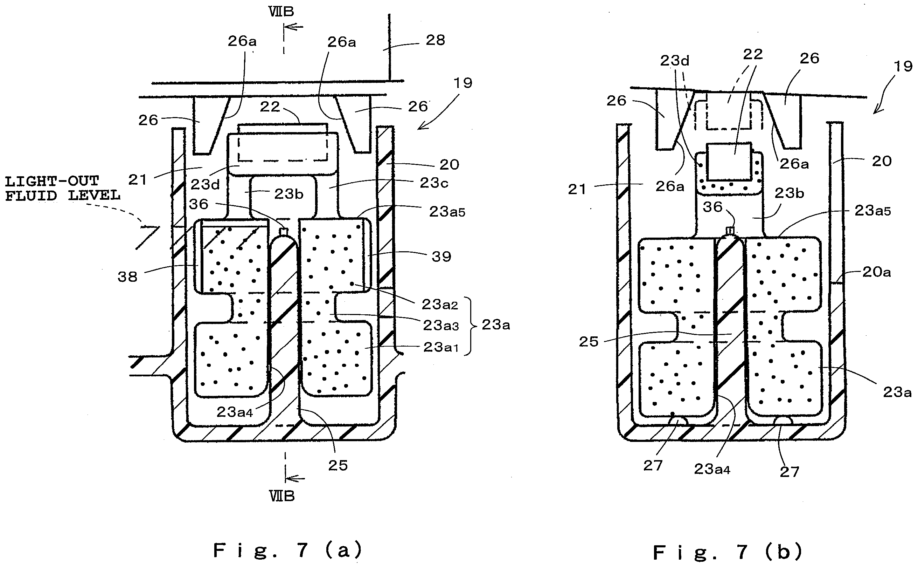

FIG. 7 (a) and FIG. 7 (b) show a third example of a mode for carrying out the reservoir tank of the present invention, with FIG. 7 (a) being the same sectional view as FIG. 3 (a) and FIG. 7 (b) being a sectional view along line VIIB-VIIB in FIG. 7 (a).

As shown in FIG. 7 (a) and FIG. 7 (b), in the reservoir tank 5 of the third example, the relative height position of the light-out fluid level with respect to the height position of the magnet 22 differs from the relative height position of the light-out fluid level with respect to the height position of the magnet 22 of the first example. That is, the relative height position of the light-out fluid level with respect to the height position of the magnet 22 of the third example is small compared to that of the first example. At this time, the upwardly projecting amount of the upper surface 23a₅ of the float body 23a with respect to the height position of the light-out fluid level of the third example is the same as the upwardly projecting amount of the same in the first example. Consequently, in the reservoir tank 5 of the third example, the height of the magnet braces 23b and 23c is made lower than the height of the magnet braces 23b and 23c of the first example. In this way, because the magnet braces 23b and 23c are made lower, the strength of the magnet braces 23b and 23c is made greater compared to the first example. That is, the magnet braces 23b and 23c of the third example are given a high-strength structure.

According to the reservoir tank 5 of the third example, the magnet braces 23b and 23c are given a high-strength structure, so it becomes possible to suppress bending deformation of the magnet braces 23b and 23c even without disposing the reinforcement ribs 23b₁ and 23b₂ and 23c₁ and 23c₂ of the first example.

Other configurations and other action and effects of the reservoir tank 5 of the third example are the same as those in the second example.

The present invention is not limited to the above first and second examples and is capable of various design changes in the scope of matters set forth in the claims.

### Industrial Applicability

The reservoir tank pertaining to the present invention can be suitably utilized for a reservoir tank that is used in hydraulic brake systems and hydraulic clutch systems utilizing hydraulic pressure such as oil pressure and stores hydraulic fluid.

Further, the brake system pertaining to the present invention can be suitably utilized for a brake system that uses hydraulic fluid stored in a reservoir tank and applies brakes to wheels.

## Claims

1. A reservoir tank 5 comprising a fluid volume detection unit 19 that detects stored hydraulic fluid,
the fluid volume detection unit 19 comprising a float 23 which moves up and down in accordance with the fluid level of the hydraulic fluid, a lead switch 24 that switches on when the fluid level of the stored hydraulic fluid is equal to or less than a predetermined fluid level and switches off when the fluid level is higher than the predetermined fluid level and a magnet 22 that is disposed on the float and that switches the lead switch 24 on and off and the lead switch 24 being disposed above the magnet,
**characterised in that**
the float has a float body 23a, two magnet braces 23b, 23c that are disposed projecting upward from the float body 23a and at predetermined interval apart from each other in a longitudinal direction of the magnet 22, a magnet support portion 23d that is disposed on upper ends of the magnet braces and supports the magnet 22, and brace reinforcement members (23b1, 23b2, 23c1, 23c2) that reinforce the magnet braces in a direction perpendicular to a longitudinal direction of the magnet 22 and are formed to have a width that becomes larger from the magnet support portion 23d toward the float body 23 so strength is increased.

2. The reservoir tank according to claim 1, wherein
the float is integrally molded and formed by resin, and
the brace reinforcement members have draft for removing a mold at a time of mold release.

3. The reservoir tank according to claim 2, wherein the
draft is formed in a direction that does not hinder the flow of the resin at a time of resin filling.

4. A reservoir tank 5 comprising a fluid volume detection unit that detects stored hydraulic fluid, the fluid volume detection unit 19 comprising:
a lead switch 24 that switches on when the fluid level of the stored hydraulic fluid is equal to or less than a predetermined fluid level and switches off when the fluid level is higher than the predetermined fluid level and a float 23 on which a magnet 22 that switches the lead switch 24 on and off is disposed and which moves up and down in accordance with the fluid level of the hydraulic fluid, and the lead switch being disposed above the magnet 22,
**characterised in that**
the float 23 has a float body 23a, magnet braces 23b, 23c that are disposed projecting upward from the float body 23a, and a magnet support portion 23d that is disposed on upper ends of the magnet braces 23b, 23c and supports the magnet 22, and the magnet braces are formed in trapezoidal shapes as seen from a lengthwise direction of the magnet.

5. A brake system 1 comprising at least:
a reservoir tank 5 that stores hydraulic fluid,
a master cylinder 4 to which the hydraulic fluid inside the reservoir tank 5 is supplied and which generates braking pressure at the time of operation, and
brake cylinders 6 that operate on hydraulic pressure from the master cylinder,
**characterised in that**
the reservoir tank 5 is the reservoir tank 5 according to any one of claims 1 to 4.

## Patentansprüche

1. Speichertank 5, der eine Fluidvolumen-Detektionseinheit 19 umfasst, die gespeichertes Hydraulikfluid detektiert, wobei die Fluidvolumen-Detektionseinheit 19 einen Schwimmer 23, der sich in Übereinstimmung mit dem Fluidpegel des Hydraulikfluids aufwärts und abwärts bewegt, einen Reedschalter 24, der einschaltet, wenn der Fluidpegel des gespeicherten Hydraulikfluids gleich oder niedriger als ein vorab festgelegter Fluidpegel ist, und der ausschaltet, wenn der Fluidpegel höher als der vorab festgelegte Fluidpegel ist, und einen Magneten 22, der auf dem Schwimmer angeordnet ist und der den Reedschalter 24 ein- und ausschaltet, umfasst, wobei der Reedschalter 24 über dem Magneten angeordnet ist,
**dadurch gekennzeichnet, dass**
der Schwimmer einen Schwimmerkörper 23a, zwei Magnetstützen 23b, 23c, die so angeordnet sind, dass sie von dem Schwimmerkörper 23a nach oben vorstehen und in Längsrichtung des Magneten 22 um einen vorab festgelegten Abstand voneinander entfernt sind, einen Magnethalteabschnitt 23d, der an oberen Enden der Magnetstützen angeordnet ist und den Magneten 22 hält, und Stützenverstärkungselemente (23b1, 23b2, 23c1, 23c2), die die Magnetstützen in einer Richtung senkrecht zu einer Längsrichtung des Magnet 22 verstärken und so gebildet sind, dass sie eine Breite haben, die von dem Magnethalteabschnitt 23d in Richtung des Schwimmerkörpers 23 größer wird, so dass die Festigkeit erhöht wird, umfasst.

2. Speichertank nach Anspruch 1, wobei der Schwimmer einteilig gegossen und durch Harz gebildet ist und wobei die Stützenverstärkungselemente eine Schräge zum Entfernen einer Gießform zum Zeitpunkt eines Lösens der Gießform aufweisen.

3. Speichertank nach Anspruch 2, wobei die Schräge in einer Richtung ausgebildet ist, die das Fließen des Harzes zum Zeitpunkt einer Harzbefüllung nicht behindert.

4. Speichertank 5, der eine Fluidvolumen-Detektionseinheit umfasst, die gespeichertes Hydraulikfluid detektiert, wobei die Fluidvolumen-Detektionseinheit 19 Folgendes umfasst:
einen Reedschalter 24, der einschaltet, wenn der Fluidpegel des gespeicherten Hydraulikfluids gleich oder niedriger als ein vorab festgelegter Fluidpegel ist, und der ausschaltet, wenn der Fluidpegel höher als der vorab festgelegte Fluidpegel ist, und einen Schwimmer 23, auf dem ein Magnet 22, der den Reedschalter 24 ein- und ausschaltet, angeordnet ist, und der sich in Übereinstimmung mit dem Fluidpegel des Hydraulikfluids aufwärts und abwärts bewegt, wobei der Reedschalter über dem Magneten 22 angeordnet ist,
**dadurch gekennzeichnet, dass**
der Schwimmer 23 einen Schwimmerkörper 23a, Magnetstützen 23b, 23c, die so angeordnet sind, dass sie von dem Schwimmerkörper 23a nach oben vorstehen, und einen Magnethalteabschnitt 23d, der an oberen Enden der Magnetstützen 23b, 23c angeordnet ist und den Magneten 22 hält, aufweist, und die Magnetstützen in Längsrichtung des Magneten in Trapezformen ausgebildet sind.

5. Bremssystem 1, das wenigstens Folgendes umfasst:
einen Speichertank 5, der Hydraulikfluid speichert,
einen Hauptzylinder 4, dem das Hydraulikfluid in dem Speichertank 5 zugeführt wird und der zum Zeitpunkt der Betätigung einen Bremsdruck erzeugt, und
Bremszylinder 6, die bei hydraulischem Druck von dem Hauptzylinder arbeiten,
**dadurch gekennzeichnet, dass**
der Speichertank 5 der Speichertank 5 nach einem der Ansprüche 1 bis 4 ist.

## Revendications

1. Réservoir (5) comprenant une unité de détection de volume de fluide (19) qui détecte la présence d'un fluide hydraulique stocké,
cette unité de détection de volume de fluide (19) comprenant un flotteur (23) qui se déplace vers le haut et vers le bas selon le niveau de fluide hydraulique, un commutateur de tête (24) qui établit le contact lorsque le niveau du fluide hydraulique stocké est égal ou inférieur à un niveau prédéfini et coupe le contact lorsque le niveau de fluide est supérieur au niveau prédéfini et un aimant (22) qui est monté sur le flotteur et qui commute le commutateur de tête (24), pour établir ou couper le contact, le commutateur de tête (24) étant monté au-dessus de l'aimant,
**caractérisé en ce que**
le flotteur comprend un corps de flotteur (23a), deux entretoises magnétiques (23b, 23c) qui sont situées dans le prolongement vers le haut du corps de flotteur (23a) et à une distance prédéfinie l'une de l'autre dans la direction longitudinale de l'aimant (22), une partie porte-aimant (23d) qui est montée aux extrémités supérieures des entretoises magnétiques et porte l'aimant (22), et des éléments de renfort d'entretoises (23b1, 23b2, 23c1, 23c2) qui renforcent les entretoises magnétiques dans une direction perpendiculaire à la direction longitudinale de l'aimant (22) et sont réalisées de façon à avoir une largeur qui augmente de la partie porte-aimant (23d) vers le corps de flotteur (23) de façon à augmenter la résistance.

2. Réservoir conforme à la revendication 1, dans lequel le flotteur est moulé intégralement et réalisé en résine et les éléments de renfort d'entretoises comportent des tirants permettant leur extraction du moule lors du démoulage.

3. Réservoir conforme à la revendication 2, dans lequel le tirant est formé dans une direction qui n'empêche pas l'écoulement de la résine lors du remplissage.

4. Réservoir (5) comprenant une unité de détection de volume qui détecte la présence d'un fluide hydraulique stocké, cette unité de détection de volume de fluide (19) comprenant :
un commutateur de tête (24) qui établit le contact lorsque le niveau du fluide hydraulique stocké est égal ou inférieur à un niveau prédéfini et coupe le contact lorsque le niveau de fluide est supérieur au niveau prédéfini et un flotteur (23) sur lequel est monté un aimant (22) qui commute le commutateur de tête (24) pour établir ou couper le contact et se déplace vers le haut et vers le bas selon le niveau du fluide hydraulique, et le commutateur de tête étant monté au-dessus de l'aimant (22),
**caractérisé en ce que**
le flotteur (23) comprend un corps de flotteur (23a), des entretoises magnétiques (23b, 23c) qui sont situées dans le prolongement vers le haut du corps de flotteur (23a) et une partie porte-aimant (23d) qui est située aux extrémités supérieures des entretoises (23b, 23c) et porte l'aimant (22), les entretoises magnétiques ayant une forme trapézoïdales lorsqu'elles sont observées dans la direction de la longueur de l'aimant.

5. Système de freins (1) comprenant au moins :
un réservoir (5) dans lequel est stocké un fluide hydraulique,
un maître cylindre (4) auquel est fourni le fluide hydraulique renfermé dans le réservoir (5) et qui génère une pression de freinage lors de son fonctionnement, et
des cylindres de frein (6) qui agissent sur la pression hydraulique provenant du maître-cylindre,
**caractérisé en ce que**
le réservoir (5) est un réservoir (5) conforme à l'une quelconque des revendications 1 à 4.
